# EUROPEAN PATENT SPECIFICATION

(11) **EP 3 003 615 B1**
(45) Date of publication and mention of the grant of the patent: **12.07.2017**
(21) Application number: 14736970.6
(22) Date of filing: 27.05.2014
(51) Int. Cl.: B23B 31/26, B23B 31/107, B23B 31/30

(54) **CHUCK LOCKING DEVICE FOR MACHINE TOOLS**
FUTTERSPERRVORRICHTUNG FÜR WERKZEUGMASCHINEN
DISPOSITIF DE VERROUILLAGE DE MANDRIN POUR MACHINES-OUTILS

(30) Priority: 04.06.2013 IT MI20130913
(43) Date of publication of application: 13.04.2016
(73) Proprietor: Ferraro, Antonio, 20123 Milano MI (IT)
(72) Inventor: Ferraro, Antonio, 20123 Milano MI (IT)
(74) Representative: Concone, Emanuele
(86) International application number: PCT/IB2014/061737
(87) International publication number: WO 2014/195824

(56) References cited:
- EP-A1- 0 782 897
- EP-A1- 1 721 691
- EP-A2- 0 237 497
- DE-U1- 8 516 648
- GB-A- 1 456 611
- IT-B- 1 198 412
- US-A- 3 684 303

## Description

The present invention relates to a chuck locking device for machine tools according to the preamble of claim 1. It is known that a chuck is a device, usually connected to the spindle of a machine tool, by which it is possible to grip the outside of a rotating workpiece or tool. There are various types of chuck, and the present application specifically relates to the type of chuck disclosed in patents EP 0237497B1 and EP 1721691B1 in the name of the same applicant, over which this application is an improvement. Therefore, reference is made to the above-mentioned patents for a detailed description of the operation of this type of chuck, whereas this description concentrates on the novel aspects of the new version of the locking device.

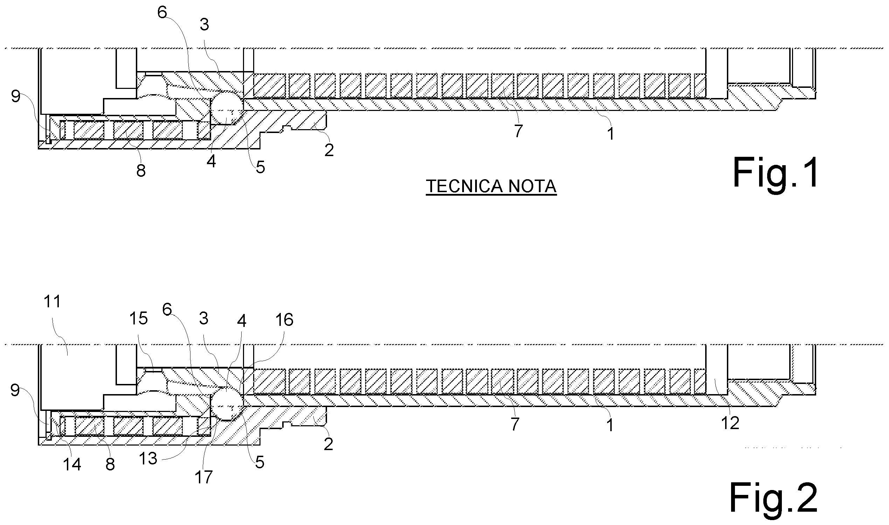

In brief, the prior art locking device, illustrated in Fig. 1, includes an axially mobile member 1 slidable within an axially stationary member 2, and an expander 3 axially slidable within said mobile member 1 and suitable to push three wedging bodies 4 (usually balls) radially outwards against an abutment surface 5 of said stationary member 2, through proper apertures 6 formed in the mobile member 1. The device is driven into the locking position by a preloaded spring system, a main spring 7 and a secondary spring 8, whereas the unlocking is carried out by a hydraulic system that overcomes the force of the springs. Specific reference will be made hereafter to spherical wedging bodies, being it clear that what is said also applies with proper changes to cylindrical wedging bodies as explained in the above-mentioned patent EP 0237497B1.

This known device is quite safe and effective, however it has been found that in certain cases an inappropriate working, an erroneous assembly, a careless maintenance or unauthorized interventions carried out by the operator may result in improper operation of the device. The applicant has therefore considered necessary to increase the degree of passive safety of the device to prevent the preloaded springs from being able to release their energy in an uncontrolled manner with the risk of injury of the operator.

A first problem is due to the fact that the races formed in the outer surface of expander 3, along which balls 4 roll, have a longitudinal profile with a continuously decreasing slope from the proximal end to the distal end of expander 3 which ends with a "pass-through" profile, i.e. is the continuing decrease of the slope reaches a point that allows balls 4 to leave their races at the distal end ("distal" is meant to be the end towards the portion of the device where the piece or tool is secured).

Therefore, when a conventional device is in its minimum working position, illustrated in Fig.1, in which balls 4 have made the maximum radial displacement and are located at the minimum working distance from the distal end of expander 3, i.e. are resting on the races in the area of minimum slope, in rare circumstances it was observed that expander 3 was released from its seat overcoming the impediment of balls 4 under the action of the main spring 7 which pushes on its distal end. This results from the fact that in said position expander 3, due to the effect of the force of spring 7 that pushes it, discharges through balls 4 the radial force resulting from the load of spring 7 on the stationary member 2, generating a very high pressure in the abutment point, but there is no mechanical stop that prevents further movement of expander 3 if it slides on balls 4 and/or the wear of the parts makes the pressure locking ineffective.

Another drawback of the conventional device described in the aforementioned patents occurs in case of breakage or detachment of the Seeger ring 9 located at the proximal end of the stationary member 2 to act as a retainer for the mobile member 1, and therefore also for balls 4 housed therein, in the above-mentioned minimum working position. This event may occur for example when the operator, to disassemble the device, applies external forces (e.g. blows) at its distal end which are added to the force of the secondary spring 8, thereby causing the breakage or detachment of the Seeger ring 9 and the consequent escape of the mobile member 1, balls 4 and expander 3.

Therefore the object of the present invention is to provide a device which overcomes said drawbacks. This object is achieved by means of a device according to claim 1 in which the expander races have a longitudinal profile with decreasing slope from the proximal end towards the distal end up to the point of contact with the balls which corresponds to the minimum working position, and increasing slope from said point up to their distal end. In a preferred embodiment the stationary member is further provided not only with the conventional distal abutment surface against which the balls are pushed to lock the device in the different working positions, but also with a proximal abutment surface against which the balls abut in the minimum working position.

The main advantage of said device is that the increasing slope of the races in the above-mentioned terminal distal length, which is normally unused since it is beyond the minimum working position of the device, allows to obtain an expander with a "closed" profile instead of an expander with a "pass-through" profile thus preventing the balls from leaving their races at the distal end of the expander. In this way, the races themselves are equipped with a mechanical end stop that prevents the expander from overcoming the balls and exiting from its seat.

Another advantage of this device, in the preferred embodiment described above, is that of providing greater safety against the risk of breakage or detachment of the Seeger ring since even in the absence of the latter the proximal abutment of the stationary member acts as an additional mechanical stop that by blocking the balls prevents the escape of the mobile member and of the expander.

These and other advantages and characteristics of the device according to the present invention will be clear to those skilled in the art from the following detailed description of two embodiments thereof, with reference to the annexed drawings wherein:
Fig.1 is a diagrammatic longitudinal sectional view of a prior art locking device at the minimum working position;
Fig.2 is a diagrammatic longitudinal sectional view of the device according to the invention at the minimum working position; and
Fig.3 is a diagrammatic longitudinal sectional view of the device of Fig.2 at the rest position, i.e. with the chuck unlocked.

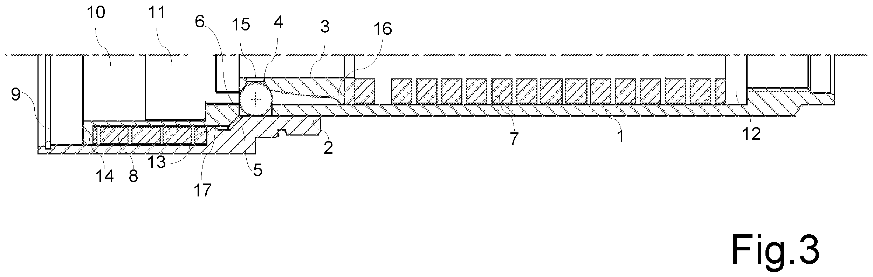

With reference to figures 2 and 3, there is seen that the device according to the present invention conventionally includes an axially mobile member 1 slidable within an axially stationary member 2, and an expander 3 axially slidable within said mobile member 1 and suitable to push three wedging bodies 4 of spherical shape radially outwards against an abutment surface 5 of said stationary member 2, through proper apertures 6 formed in the mobile member 1.

The device is driven into the locking position by a spring system made up of a pair of springs 7 and 8, preferably coil springs, whereas the unlocking is carried out by a hydraulic system that by feeding pressurized fluid into a chamber 10 pushes forward an unlocking piston 11 so as to overcome the force of said springs. More specifically, the main spring 7 is arranged inside the mobile member 1 between a distal shoulder 12 and the distal end of expander 3, whereas the secondary spring 8 is arranged inside the stationary member 2 between a distal shoulder 13 and a flange 14 formed at the proximal end of the mobile member 1.

In the minimum working position when the mobile member 1 least projects from the stationary member 2, said flange 14 abuts (Fig.2) against a Seeger ring 9 located in a proper seat formed at the proximal end of the stationary member 2, so as to act as a mechanical stop against a further movement of the mobile member 1.

On the external surface of expander 3 there are formed the races for the rolling of balls 4, said races terminating at the proximal end into recesses 15 suitable to receive balls 4 so that the latter do not project from the external surface of the mobile member 1 when the device is at the rest position (Fig.3).

A first novel aspect of the present invention, as previously mentioned, resides in the particular longitudinal profile of the races of expander 3 that have a decreasing slope from the proximal end towards the distal end up to the point of contact with balls 4 which corresponds to the minimum working position (Fig.2), and an increasing slope from said point up to their distal end. This increasing slope in the terminal distal length 16 of the races as defined above prevents balls 4 from coming out at the distal end of expander 3, which therefore has a closed profile at said end. In this way, despite the push of the main spring 7, in the above-mentioned minimum working position expander 3 cannot overcome balls 4 and exit from its seat since it abuts against balls 4 at the terminal distal length 16 of the races.

A second novel aspect of this locking device, in its preferred embodiment, comes from the fact that the stationary member 2 is provided not only with the conventional distal abutment surface 5 against which balls 4 are pushed to lock the device in the various working positions, but also with a proximal abutment surface 17 against which balls 4 abut at the minimum working position illustrated in Fig.2. In this way, as previously mentioned, even in case of removal or breakage of the Seeger ring 9 the proximal abutment 17 acts as an additional mechanical stop that locks balls 4 between the stationary member 2 and expander 3 thus preventing the escape of the mobile member 1.

In order to achieve a more uniform distribution of the load and a better lubrication of the races, it is also preferable to provide a central longitudinal groove formed in the bottom of the races. Finally, the decreasing slope of the races from the proximal end towards the distal end up to the point of contact with balls 4 which corresponds to the minimum working position is preferably obtained along a constant radius of curvature calculated such that the slope of the races progressively decreases from about 7° to about 2,5°.

It is clear that the above-described and illustrated embodiments of the device according to the invention are just examples susceptible of various modifications without departing from the scope of protection of the invention as defined hereunder. In particular, the slope of the terminal distal length 16 and/or of the proximal abutment 17 may have any minimum value sufficient to achieve the desired function of mechanical stop for balls 4 abutting on them.

## Claims

1. Chuck locking device for machine tools, having a distal end where a workpiece or a tool is secured, including an axially mobile member (1) slidable within an axially stationary member (2), and an expander (3) axially slidable within said mobile member (1) and suitable to push three wedging bodies (4) radially outwards against a distal abutment surface (5) of said stationary member (2) through proper apertures (6) formed in the mobile member (1), said wedging bodies (4) rolling along races, formed on the external surface of said expander (3), that have a decreasing slope from their proximal end towards their distal end up to the point of contact with the wedging bodies (4) which corresponds to the minimum working position of the device in which the mobile member (1) least projects from the stationary member (2), **characterized in that** in the terminal distal length (16) of the races beyond said point of contact said slope increases from said point of contact up to their distal end so as to obtain a closed profile of the expander (3) suitable to prevent the wedging bodies (4) from leaving through its distal end.

2. Chuck locking device according to claim 1, **characterized in that** the stationary member (2) is further provided with a proximal abutment surface (17) against which the wedging bodies (4) abut in the minimum working position of the device.

3. Chuck locking device according to any of the preceding claims, **characterized in that** a central longitudinal groove is formed in the bottom of the races.

4. Chuck locking device according to any of the preceding claims, **characterized in that** the decrease in the slope of the races from their proximal end towards their distal end up to the point of contact with the wedging bodies (4) which corresponds to the minimum working position of the device is progressively obtained along a constant radius of curvature.

5. Chuck locking device according to any of the preceding claims, **characterized in that** the slope of the races from their proximal end towards their distal end up to the point of contact with the wedging bodies (4) which corresponds to the minimum working position of the device is included in the range from 7° to 2,5°.

## Patentansprüche

1. Futtersperrvorrichtung für Werkzeugmaschinen, mit einem distalen Ende, wo ein Werkstück oder ein Werkzeug befestigt wird, umfassend ein axial bewegliches Teil (1), das innerhalb eines axial stationären Teils (2) verschiebbar ist, und einen innerhalb des besagten beweglichen Teils (1) axial verschiebbaren Spreizer (3), der in der Lage ist, drei Klemmkörper (4) über passende, in dem beweglichen Teil (1) ausgebildete Öffnungen (6) radial nach außen gegen eine distale Widerlagerfläche (5) des besagten stationären Teils (2) zu drücken, wobei die besagten Klemmkörper (4) sich entlang von Laufbahnen abwälzen, welche an der äußeren Oberfläche des besagten Spreizers (3) ausgeformt sind, und welche eine von ihrem proximalen Ende zu ihrem distalen Ende bis zu demjenigen Kontaktpunkt mit den Klemmkörpern (4) abnehmende Steigung aufweisen, welcher mit der minimalen Arbeitsposition der Vorrichtung korrespondiert, bei welcher das bewegliche Teil (1) am wenigsten aus dem stationären Teil (2) hervorsteht, **dadurch gekennzeichnet, dass** in dem endseitigen, distalen Abschnitt (16) der Laufbahnen jenseits des besagten Kontaktpunktes die besagte Steigung von dem besagten Kontaktpunkt zu dem distalen Ende hin zunimmt, um ein versperrendes Profil des Spreizers (3) zu ergeben, welches in der Lage ist, die Klemmkörper (4) davon abzuhalten, durch sein distales Ende hinauszutreten.

2. Futtersperrvorrichtung nach Anspruch 1, **dadurch gekennzeichnet, dass** das stationäre Teil (2) ferner mit einer proximalen Widerlagerfläche (17) versehen ist, an welcher die Klemmkörper (4) in der minimalen Arbeitsposition der Vorrichtung anliegen.

3. Futtersperrvorrichtung nach einem der vorangehenden Ansprüche, **dadurch gekennzeichnet, dass** am Boden der Laufbahnen eine zentrale Längsnut eingeformt ist.

4. Futtersperrvorrichtung nach einem der vorangehenden Ansprüche, **dadurch gekennzeichnet, dass** die Reduzierung der Steigung der Laufbahnen von deren proximalem Ende zu ihrem distalen Ende hin bis zu demjenigen Kontaktpunkt mit den Klemmkörpern (4), welcher mit der minimalen Arbeitsposition der Vorrichtung korrespondiert, sich entlang eines konstanten Kurvenradius fortschreitend ergibt.

5. Futtersperrvorrichtung nach einem der vorangehenden Ansprüche, **dadurch gekennzeichnet, dass** die Steigung der Laufbahnen von deren proximalem Ende zu ihrem distalen Ende hin bis zu demjenigen Kontaktpunkt mit den Klemmkörpern (4), welcher mit der minimalen Arbeitsposition der Vorrichtung korrespondiert, in dem Bereich von 7° bis 2,5° liegt.

## Revendications

1. Dispositif de verrouillage de mandrin pour machines-outils ayant une extrémité distale où une pièce ou un outil est fixé(e), comprenant un élément axialement mobile (1) pouvant coulisser dans un élément axialement fixe (2), et un dispositif d'expansion (3) pouvant coulisser de manière axiale à l'intérieur dudit élément mobile (1) et approprié pour pousser trois corps de calage (4) radialement vers l'extérieur contre une surface de butée distale (5) dudit élément fixe (2) par des ouvertures (6) appropriées formées dans l'élément mobile (1), lesdits corps de calage (4) roulant le long de chemins de roulement, formés sur la surface externe dudit dispositif d'expansion (3), qui ont une pente décroissante à partir de leur extrémité proximale vers leur extrémité distale jusqu'au point de contact avec les corps de calage (4) qui correspond à la position de travail minimum du dispositif dans laquelle l'élément mobile (1) fait le moins saillie de l'élément fixe (2), **caractérisé en ce que** dans la longueur distale terminale (16) des chemins de roulement au-delà dudit point de contact, ladite pente augmente à partir dudit point de contact jusqu'à leur extrémité distale afin d'obtenir un profil fermé du dispositif d'expansion (3) approprié pour empêcher les corps de calage (4) de sortir par son extrémité distale.

2. Dispositif de verrouillage de mandrin selon la revendication 1, **caractérisé en ce que** l'élément fixe (2) est en outre prévu avec une surface de butée proximale (17) contre laquelle les corps de calage (4) viennent en butée dans la position de travail minimum du dispositif.

3. Dispositif de verrouillage de mandrin selon l'une quelconque des revendications précédentes, **caractérisé en ce qu'**une rainure longitudinale centrale est formée dans le fond des chemins de roulement.

4. Dispositif de verrouillage de mandrin selon l'une quelconque des revendications précédentes, **caractérisé en ce que** la diminution dans la pente des chemins de roulement à partir de leur extrémité proximale vers leur extrémité distale jusqu'au point de contact avec les corps de calage (4) qui correspond à la position de travail minimum du dispositif est progressivement obtenue le long d'un rayon de courbure constant.

5. Dispositif de verrouillage de mandrin selon l'une quelconque des revendications précédentes, **caractérisé en ce que** la pente des chemins de roulement à partir de leur extrémité proximale vers leur extrémité distale jusqu'au point de contact avec les corps de calage (4) qui correspond à la position de travail minimum du dispositif est comprise dans la plage allant de 7° à 2,5°.
